# EUROPÄISCHE PATENTSCHRIFT

(11) **EP 0 724 323 B1**
(45) Veröffentlichungstag und Bekanntmachung des Hinweises auf die Patenterteilung: **25.09.1996**
(21) Anmeldenummer: 95100637.8
(22) Anmeldetag: 18.01.1995
(51) Int. Cl.: H02K 5/10

(54) **Kommutatormotor für Kraftfahrzeug-Gebläseantrieb**
Commutator motor for motor vehicle fan drive
Moteur à collecteur pour l'entraînement du ventilateur d'un véhicule

(43) Veröffentlichungstag der Anmeldung: 31.07.1996
(73) Patentinhaber: SIEMENS AKTIENGESELLSCHAFT, 80333 München (DE)
(72) Erfinder: Göb, Werner, D-97273 Kürnach (DE); Tiemeyer, Peter, D-97974 Würzburg (DE)

(56) Entgegenhaltungen:
- EP-A- 0 612 136
- DE-A- 2 531 483
- DE-A- 3 533 115
- DE-U- 9 204 516
- US-A- 3 919 574
- US-A- 4 499 390
- PATENT ABSTRACTS OF JAPAN vol. 13 no. 160 (E-744) [3508] ,18.April 1989 & JP-A-63 314147 (NIPPON DENSO CO. LTD.) 22.Dezember 1988,

## Beschreibung

Die Erfindung bezieht sich auf einen Kraftfahreug-Gebläseantrieb mit einem Kommutatormotor gemäß Anspruch 1.

Bei Kommutatormotoren, die zum Antrieb von Geblasen in Heizungs- bzw. Klimaanlagen von Kraftfahrzeugen eingesetzt werden, besteht die Gefahr, daß bei einem Wechsel des Fahrzeugs von einer Klimakaltzone unterhalb 0 °C in eine Klimawarmzone oberhalb 0 °C beim Einschalten eines zuvor abgeschalteten Gebläses Funktionsprobleme durch eine Kommutatorvereisung entstehen.

Gemäß Aufgabe vorliegender Erfindung soll ein einwandfreier Gebläsebetrieb bei voller Funktionstüchtigkeit des Kommutatormotors auch bei Klimawechseln gewährleistet werden können, die ansonsten bei zuvor ausgeschaltetem Kommutatormotor zu einer Kommutatorvereisung führen könnten.

Die Lösung dieser Aufgabe gelingt bei einem Kraftfahrzeug-Gebläseantrieb mit einem Kommutatormotor durch die konstruktiven Maßnahmen gemäß Patentanspruch 1; vorteilhafte Ausgestaltungen der Erfindung sind jeweils Gegenstand der Unteransprüche.

Durch den erfindungsgemäßen Hülsenteil der Kommutator-Bürstenlauffläche kann bei einfachster Montage des mit einem kommutatorseitigen Lagerbügel versehenen Kommutatormotors und unter Ausnutzung eines an sich vorhandenen Einbauraums auf einfache Weise die Kommutator-Bürstenlauffläche so weitgehend abgedeckt werden, daß bei einem schnellen Temperaturwechsel, insbesondere von einer Kaltzone unterhalb 0 °C in eine Warmzone oberhalb 0 °C, die Luftfeuchte daran gehindert ist, vor dem Einschalten des Motors an der Kommutator-Bürstenlauffläche zu kondensieren und zu einer Eisbildung zu führen. Darüber hinaus wird durch den Hülsenteil in einer für den Darüber hinaus wird durch den Hülsenteil in einer für den Einsatz in Kraftfahrzeugen vorteilhaften Weise eine Geräuschkapselung erreicht und damit eine unerwünschte Geräuschabstrahlung aus dem Kommutator-Bürstenbereich des Kommutatormotors verhindert.

In fertigungs- und montagetechnisch besonders einfacher Weise ist der Hülsenteil über die anschließenden Führungs- bzw. Halterungsteile an dem kommutatorseitigen Lagerbügel im Bereich der Statoranlage des Lagerbügels gehaltert, insbesondere durch axial geführtes Anstecken verrastet, wobei der Hülsenteil mit dem Führungs- bzw. Halterungsteil zweckmäßigerweise als einstückiges Spritzgußteil gefertigt ist.

Durch die US-A-3 919 574 bzw. die korrespondierende DE-OS-23 27 782 ist ein elektrisches Gesteinsbohr- und Meißelgerät mit einem Kollektormotor und einer den Kollektor umgebenden Abschirmung zum Schutz gegenüber umhergewirbelten Fremdkörpern bekannt, jedoch ist diese bekannte Abschirmung einstückig mit einem Halter für die Bürsten ausgebildet und soll ausschließlich als Staubschutz bei dem dort vorgesehenen Einsatz dienen.

Weiterhin sind durch die US-A-4 499 390 bzw. die DE-A-35 33 115 Generatoren mit vor dem Zutritt von Spritzwasser geschützten Schleifringen bekannt, die zu diesem Zweck von einem stirnseitig geschlossenen kommutatorseitigen Lagerschild ausgehen, an dem eine die Schleifringe umfangsseitig betriebsmäßig vor Spritzwasser schützende, mit Öffnungen für die Bürsten versehene Kunststoff-Hülsenabdeckung dicht anliegt; diese Kunststoff-Hülsenabdeckung ist im Fall der US-A-4 499 390 auf einen axialen Fortsatz der Lagerbuchse des geschlossenen kommutatorseitigen Lagerschildes und im Fall der DE-A-35 33 115 an einer innerhalb des geschlossenen kommutatorseitigen Lagerschildes befestigten Gleichrichteranschlußplatte gehaltert, insbesondere verrastet.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1: in einem axialen Längsschnitt das kommutatorseitige Ende eines Kommutatormotors;
- FIG 2: die axiale Draufsicht auf das axial offene Ende des Lagerbügels gemäß FIG 1;
- FIG 3: die Anordnung gemäß FIG 2 im Schnittverlauf III-III.

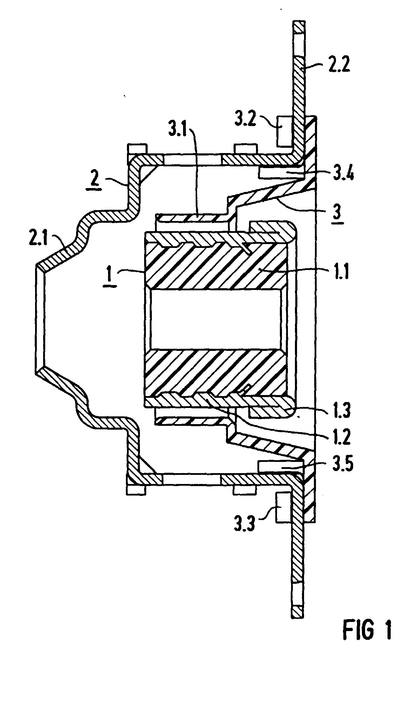

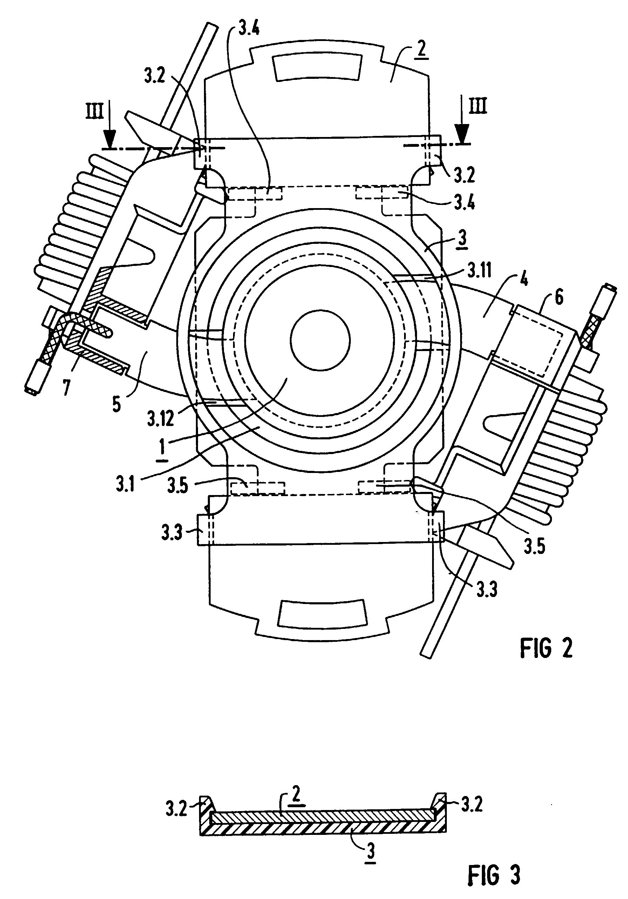

FIG 1,2 zeigen einen im wesentlichen topfförmig geformten Lagerbügel 2 eines Kommutatormotors mit einer endseitigen Lageraufnahme 2.1 für ein hier nicht dargestelltes Rotorwellenlager und mit einer Statoranlage 2.2, mit welcher der Lagerbügel 2 in ebenfalls hier nicht näher dargestellter Weise an dem einen axialen Ende des Statorpakets oder des Motorgehäuses des Kommutatormotors befestigbar ist. Innerhalb der topfförmigen Seitenwandung des Lagerbügels 2 ist ein Kommutator 1 mit einer Preßmasse 1.1 angeordnet, die radial innen auf eine hier nicht dargestellte Rotorwelle aufdrückbar ist und radial außen auf ihrer Außenumfangsfläche als Bürstenlauffläche Kommutator-Lamellen 1.2 aufnimmt, die mittels Kommutator-Haken 1.3 mit Wicklungsdrähten einer Rotorwicklung kontaktierbar sind.

Die Kommutator-Lamellen 1.2 werden von Bürsten 4;5 beschliffen, die mit ihren den Lamellen abgewandten Enden von Bürstenhaltern 6;7 aufgenommen werden.

Erfindungsgemäß ist die durch die Kommutator-Lamellen 1.2 gebildete Außenumfangsfläche des Kommutators 1, zumindest im Bereich ihrer Bürstenlauffläche, in dichtem Abstand von einem Hülsenteil 3.1 abgedeckt, der in einem anschließenden Bereich mittels Schaberippen 3.4;3.5 an der Innenumfangsfläche des topfförmigen Wandteils des Lagerbügels 2 geführt anlegbar und mittels angeformter Rasthaken 3.2;3.3 an der Statoranlage 2.2 des Lagerbügels 2 verrastbar ist.

Aufgrund der zuvor beschriebenen axialen Schaberippen 3.4;3.5 und der axialen Rasthaken 3.2;3.3 ist in fertigungs- und montagetechnisch günstiger Weise der Hülsenteil 3.1 axial an den Lagerbügel 2 vor dessen Montage am Statorpaket bzw. Motorgehäuse ansteckbar und ist bei der axialen Aufbaumontage des Motors anschließend der Kommutator mit seiner Bürstenlauffläche in den Hülsenteil 3.1 axial einsteckbar.

Der Hülsenteil 3.1 bzw. die Führungsteile 3.4;3.5 bzw. die Halterungsteile 3.2;3.3 sind Teil eines, insbesondere einstückigen, Kunststoff-Spritzgußteils das - wie zuvor beschrieben - an dem Lagerbügel 2 geführt ansteckbar und in vorteilhafter Weise einfach vormontierbar ist.

Die Bürsten 4;5 sind durch korrespondierende Durchstecköffnungen 3.11;3.12 in dem Hülsenteil 3.1 derart hindurchgesteckt, daß einerseits eine hinreichende Bürstenbeweglichkeit gewährleistet jedoch andererseits ein sich bildender Reif am Zugang zu der Bürstenumfangsfläche gehindert ist.

## Patentansprüche

1. Kraftfahrzeug-Gebläseantrieb mit einem Kommutatormotor mit zumindest einem kommutatorseitigen Lagerbügel (2) für ein Rotorwellenlager und einem rotorseitigen Kommutator (1) mit einer Bürstenlauffläche, die von statorseitig gehaltenen Bürsten (4;5) beschliffen ist, mit den Merkmalen:
a) Die Bürstenlauffläche ist von einem zylindermantelförmigen Hülsenteil (3.1) in solch dichtem Abstand umgeben, daß bei einem schnellen Temperaturwechsel die Bürstenlauffläche von einer Eisbildung durch kondensierende Luftfeuchte auf dem Kommutator frei bleibt;
b) die Bürsten (4;5) sind durch korrespondierende Durchstecköffnungen (3.11;3.12) in dem Hülsenteil (3.1) hindurchgesteckt

2. Kraftfahrzeug Gebläseantrieb nach Anspruch 1 mit dem Merkmal:
(c) Der Hülsenteil (3.1) ist über anschließende Führungs- bzw. Halterungsteile (3.4;3.5 bzw. 3.2;3.3) als gesondertes Bauteil an einem statorseitigen Aufnahmeteil, insbesondere dem kommutatorseitigen Lagerbügel (2), im Bereich der Statoranlage des Lagerbügels (2) gehaltert, insbesondere verrastet.

3. Kraftfahrzeug-Gebläseantrieb nach Anspruch 2 mit dem Merkmal:
d) Der Hülsenteil (3.1) ist mit den anschließenden Führungs- bzw. Halterungsteilen (3.4;3.5 bzw. 3.2;3.3) an einem statorseitigen Aufnahmeteil, insbesondere an dem kommutatorseitigen Lagerbügel (2), vorfixierbar gehaltert.

4. Kraftfahrzeug-Gebläseantrieb nach zumindest einem der vorhergehenden Ansprüche 2 bzw. 3 dem Merkmal:
e) Der Hülsenteil (3.1) ist mit den anschließenden Führungs- bzw. Halterungsteilen (3.4;3.5 bzw. 3.2;3.3) an einen statorseitigen Aufnahmeteil, insbesondere an den kommutatorseitigen Lagerbügel (2), axial ansteckbar.

5. Kraftfahrzeug-Gebläseantrieb nach zumindest einem der vorhergehenden Ansprüche 2 bis 4 mit dem Merkmal:
f) Der Hülsenteil (3.1) bzw. die Führungsteile (3.4;3.5) bzw. die Halterungsteile (3.2;3.3) sind Teil eines, insbesondere einstückigen, Kunststoff-Spritzgußteils.

## Claims

1. Motor-vehicle fan drive having a commutator motor having at least one bearing clip (2) on the commutator side for a rotor shaft bearing and having a commutator (1) on the rotor side that has a brush contact face over which there slide brushes (4; 5) which are held on the stator side, having the features:
a) the brush contact face is surrounded by a sleeve portion (3.1) in the form of a cylinder jacket at such a short distance that in the case of a rapid change in temperature the brush contact face remains free of any ice formation as a result of condensed air moisture on the commutator;
b) the brushes (4;5) are plugged through corresponding through-openings (3.11; 3.12) in the sleeve portion (3.1).

2. Motor-vehicle fan drive according to claim 1 having the feature:
c) the sleeve portion (3.1) is supported, in particular latched, by way of connected guiding and support portions (3.4; 3.5 and 3.2; 3.3 respectively), as a separate component, on a receiving portion on the stator side, in particular on the bearing clip (2) on the commutator side, in the region of the stator contact of the bearing clip (2).

3. Motor-vehicle fan drive according to claim 2 having the feature:
d) the sleeve portion (3.1) is supported in a pre-fixable manner by means of the connected guiding and support portions (3.4; 3.5 and 3.2; 3.3 respectively) on a receiving portion on the stator side, in particular on the bearing clip (2) on the commutator side.

4. Motor-vehicle fan drive according to at least one of the preceding claims 2 or 3 having the feature:
e) the sleeve portion (3.1) can be axially plugged by means of the connected guiding and support portions (3.4; 3.5 and 3.2; 3.3 respectively) onto a receiving portion on the stator side, in particular onto the bearing clip (2) on the commutator side.

5. Motor-vehicle fan drive according to at least one of the preceding claims 2 to 4 having the feature:
f) the sleeve portion (3.1) and the guiding portions (3.4; 3.5) and the support portions (3.2; 3.3) respectively are part of an injection-moulded plastics portion which, in particular, is in one piece.

## Revendications

1. Dispositif d'entraînement d'un ventilateur de véhicule automobile, comportant un moteur à collecteur ayant au moins un étrier (2) de palier du côté collecteur pour un palier d'arbre de rotor et un collecteur (1) du côté du rotor ayant une surface de frottement de balai, sur laquelle frottent des balais (4 ; 5) maintenus du côté du stator, et ayant les caractéristiques :
a) la surface de frottement de balai est entourée par une partie (3.1) de douille en forme de gaine cylindrique à une distance si proche qu'en cas de changement rapide de température, il ne se forme pas, sur la surface de frottement de balai, de glace par condensation de l'humidité de l'air sur le collecteur ;
b) les balais (4 ; 5) traversent la partie (3.1) de douille par des ouvertures (3.11 ; 3.12) correspondantes d'insertion.

2. Dispositif d'entraînement de ventilateur d'un véhicule automobile suivant la revendication 1, ayant la caractéristique :
c) la partie (3.1) de douille est maintenue, et notamment encliquetée, par l'intermédiaire de parties (3.4 ; 3.5 ou 3.2 ; 3.3) de guidage ou de maintien se raccordant en tant qu'éléments constitutifs distincts à une partie de réception côté stator, notamment à l'étrier (2) de palier côté collecteur, dans la zone de l'application au stator de l'étrier (2) de palier.

3. Dispositif d'entraînement d'un ventilateur de véhicule automobile suivant la revendication 2, ayant la caractéristique :
d) la partie (3.1) de douille est maintenue, avec possibilité d'immobilisation préalable, par les parties (3.4 ; 3.5 ou 3.2 ; 3.3) de guidage ou de fixation se raccordant, à une partie de réception côté stator, notamment à l'étrier (2) de palier côté collecteur.

4. Dispositif d'entraînement d'un ventilateur de véhicule automobile suivant au moins l'une des revendications précédentes 2 ou 3, ayant la caractéristique :
e) la partie (3.1) de douille peut être enfichée axialement, par les parties (3.4 ; 3.5 ou 3.2 ; 3.3) de guidage ou de maintien se raccordant, sur une partie de réception côté stator, notamment sur l'étrier (2) de palier côté collecteur.

5. Dispositif d'entraînement d'un ventilateur de véhicule automobile suivant au moins l'une des revendications précédentes 2 à 4, ayant la caractéristique :
f) la partie (3.1) de douille ou les parties (3.4 ; 3.5) de guidage ou les parties (3.2 ; 3.3) de maintien font partie d'une pièce moulée par injection de matière plastique notamment d'une seule pièce.
